# EUROPÄISCHE PATENTSCHRIFT

(11) **EP 0 968 150 B1**
(45) Veröffentlichungstag und Bekanntmachung des Hinweises auf die Patenterteilung: **29.08.2001**
(21) Anmeldenummer: 98912381.5
(22) Anmeldetag: 24.02.1998
(51) Int. Cl.: C04B 35/573, C04B 35/80, F16D 69/02

(54) **FASERVERSTÄRKTE VERBUNDKERAMIK UND VERFAHREN ZUR HERSTELLUNG EINER SOLCHEN**
FIBRE-REINFORCED COMPOSITE CERAMICS AND METHOD OF PRODUCING THE SAME
CERAMIQUE COMPOSITE RENFORCEE PAR FIBRES ET PROCEDE PERMETTANT DE PRODUIRE UNE TELLE CERAMIQUE

(30) Priorität: 21.03.1997 DE 19711829
(43) Veröffentlichungstag der Anmeldung: 05.01.2000
(73) Patentinhaber: DaimlerChrysler AG, 70567 Stuttgart (DE)
(72) Erfinder: DIETRICH, Gerd, D-88483 Burgrieden (DE); HAUG, Tilmann, D-88690 Uhldingen (DE); KIENZLE, Andreas, D-70619 Stuttgart (DE); SCHWARZ, Christian, D-91052 Erlangen (DE); STÖVER, Heike, D-01217 Dresden (DE); WEISSKOPF, Karl, D-53123 Bonn (DE); GADOW, Rainer, D-84544 Aschau am Inn (DE)
(86) Internationale Anmeldenummer: EP9801044
(87) Internationale Veröffentlichungsnummer: WO9842635

(56) Entgegenhaltungen:
- EP-A- 0 541 917
- DE-A- 4 438 456

## Beschreibung

Die Erfindung betrifft eine faserverstärkte Verbundkeramik mit hochwarmfesten Fasern auf der Basis von Si/C/B/N, die mit einer Matrix auf Si-Basis reaktionsgebunden sind.

Ein derartiges Verfahren und eine derartige Verbundkeramik sind aus der DE-A-4 438 455 bekannt.

Kohlenstoffaserverstärkter Kohlenstoff (C-C, auch bezeichnet als CFRC oder im deutschen Sprachgebrauch als CFC) gehört zu den seit langem erfolgreich eingeführten Verbundkeramikwerkstoffen.

Jüngst entwickelte Hochleistungsbremssysteme auf Basis von CFC-Bremsscheiben mit speziell entwickelten Reibbelägen, die etwa im automobilen Rennsport eingesetzt werden, können jedoch nur mit zahlreichen Imprägnier- bzw. Carbonisierungs- und Graphitierungszyklen hergestellt werden, so daß es sich um ein äußerst zeit-, energie- und kostenintensives Herstellverfahren handelt, wobei der Fertigungsprozeß mehrere Wochen oder Monate dauern kann. Darüber hinaus bieten CFC-Bremsscheiben für den Einsatz in normal belasteten Serienfahrzeugen unter Einfluß von Feuchtigkeit und Betriebsbedingungen bei tiefen Temperaturen völlig unzureichende Bremseigenschaften. Dies äußert sich unter anderem in einem ausgeprägt unstetigen Verhalten der Reibwerte in Abhängigkeit von der Betriebstemperatur und der Oberflächenbelegung, was eine Regelung, wie bisher bei 4-Kanal-ABS-Systemen üblich, außerordentlich erschwert oder gar unmöglich macht. Vor diesem Hintergrund wird versucht, verbesserte faserverstärkte Verbundkeramikwerkstoffe zu entwickeln, die bspw. als Bremsscheiben für Hochleistungsbremssysteme bei Kraftfahrzeugen oder bei Schienenfahrzeugen verwendet werden können. Darüber hinaus sind derartige faserverstärkte Verbundkeramikwerkstoffe auch für zahlreiche andere Anwendungen von Interesse, wie etwa als Turbinenwerkstoffe oder als Gleitlagerwerkstoffe.

Zwar ist siliziuminfiltriertes reaktionsgebundenes Siliziumcarbid (SiSiC) mit Siliziummassenanteilen (freies Silizium) zwischen 2 % und 15 % seit den 60er Jahren bekannt und für mancherlei Anwendungen im Bereich der Wärmetechnik auch marktgängig eingeführt.

Jedoch ist auch die Herstellung von SiSiC-Werkstoffen sehr aufwendig und teuer.

Aus der eingangs genannten DE-A-4 438 455 ist ein Verfahren zur Herstellung einer faserverstärkten C-SiC-Verbundkeramik bekannt, bei dem der Grünling aus harzgetränkten Geweben gebildet wird. Nachteilig daran ist, daß mit derartigen, nicht ganz billigen Vorprodukten nur sehr umständlich und mit viel Verschnittabfällen komplizierte Strukturen aufgebaut bzw. dargestellt werden können. Dadurch ist das bekannte Verfahren nicht für einen serienmäßigen Einsatz bei der Produktion von Großserienbauteilen, wie etwa Bremsscheiben, geeignet. Der laminierte Strukturaufbau führt ferner zu einer starken Anisotropie des so hergestellten Körpers bezüglich verschiedener Eigenschaften, was sich insbesondere hinsichtlich der Wärmeabfuhr aus der Bremsscheibe nachteilig äußert. Darüber hinaus neigen derartige Bremsscheiben beim Verschleiß unter Umständen zum Delaminieren, was besonders gefährlich ist.

EP 0 541 917 offenbart ein ähnliches Verfahren zur Herstellung von CFC-Vorkörpern aus Kohlenstoff-Kurzfassern mit einem härtbaren Harz, wobei jedoch die Fasern im Vorkörper ungerichtet und nicht beschichtet sind, und der CFC - Vorkörper durch Gasphasen-Abscheidung mit pyrolytischen Kohlensoff infiltriert wurde. Bei dieser Technik fehlt die Herstellung des Grünlings aus einer Preßmasse, enthaltend ein pyrolysierbares Bindemittel als Matrixmaterial.

Die Aufgabe der Erfindung besteht demnach darin, eine verbesserte faserverstärkte Verbundkeramik mit hochwarmfesten Fasern sowie ein Verfahren zur Herstellung einer solchen zu schaffen, womit eine möglichst einfache und kostengünstige Herstellung von Großserienbauteilen wie etwa Bremsscheiben ermöglicht ist und verbesserte Eigenschaften erreicht werden können.

Diese Aufgabe wird erfindungsgemäß durch ein Verfahren zur Herstellung einer faserverstärkten Verbundkeramik mit hochwarmfesten Fasern, insbesondere auf der Basis von Si/C/B/N gelöst, die mit einer Matrix auf Si-Basis reaktionsgebunden sind, gekennzeichnet durch folgende schritte:
- Imprägnieren von Faserstoffbündeln, insbesondere aus Si/C/B/N-Fasern mit einem zur Pyrolyse geeigneten Bindemittel und Verfestigen des Bindemittels;
- Herstellen einer Mischung aus Faserstoffbündeln, Füllmitteln und Pyrolysierbaren Bindemitteln;
- Pressen der Mischung zur Herstellung eines Grünlings;
- Pyrolyse des Grünlings unter Vakuum oder Schutzgas zur Herstellung eines porösen Formkörpers;
- Infiltrieren des Formkörpers mit einer Siliziumschmelze.

Diese Aufgabe wird ferner durch eine faserverstärkte Verbundkeramik mit hochwarmfesten Fasern, insbesondere auf der Basis von Si/C/B/N gelöst, die mit einer Matrix auf Si-Basis reaktionsgebunden sind, wobei in der Matrix Kurzfaserbündel statistisch verteilt eingebettet sind, die aus gebündelten Einzelfaserfilamenten unter weitgehendem Erhalt der einzelnen Filamente bestehen, wobei die Kurzfaserbündel zumindest in ihrem Randbereich von einer Beschichtung aus Kohlenstoff umgeben sind, der ganz oder teilweise mit dem metallischen bzw. halbmetallischen Matrixwerkstoff reagiert hat.

Erfindungsgemäß wurde erkannt, daß sich durch die Verwendung von Kurzfaserbündeln zur Verstärkung des Verbundwerkstoffes eine erheblich vereinfachte Herstellung ergibt, da es möglich ist, die verschiedenen Einzelkomponenten vorzumischen und zu Grünlingen zu verpressen, die anschließend nur noch pyrolisiert und dann schmelzinfiltriert werden müssen. Somit wird ein erheblich vereinfachter Herstellungsprozeß ermöglicht, der für eine Großserienfertigung geeignet ist.

Dabei wurde ferner erkannt, daß sich die günstigen Eigenschaften, wie etwa quasi-duktiles Verhalten, die grundsätzlich durch die Faserverstärkung erreicht werden können, bei der Herstellung mittels Siliziumschmelzinfiltration nur dann tatsächlich erzielen lassen, wenn zur Faserverstärkung Faserstoffbündel verwendet werden, die durch geeignete Bindemittel zusammengehalten sind und gegen den aggressiven Angriff der Siliziumschmelze geschützt sind. Dies wird erfindungsgemäß durch das Imprägnieren von Faserstoffbündeln mit einem zur Pyrolyse geeigneten Bindemittel und anschließendes Verfestigen des Bindemittels erreicht. Durch diesen Imprägnierschritt wird ein sicherer Zusammenhang der Einzelfasern im Faserstoffbündel sowie eine ausreichende mechanische Stabilität der Faserstoffbündel gewährleistet, um bei der späteren Vermischung mit den übrigen Bestandteilen zur Herstellung des Grünlings eine mechanische Beschädigung der empfindlichen Einzelfilamente weitgehend zu verhindern.

Bei der fertigen Verbundkeramik äußert sich der Schutz der Faserstoffbündel gegen den Angriff der Siliziumschmelze darin, daß die Faserstoffbündel zumindest in ihrem Randbereich von einer Beschichtung aus Kohlenstoff umgeben sind, der ganz oder teilweise mit dem Matrixwerkstoff (d.h. mit Silizium oder mit Siliziumverbindungen) reagiert hat.

Insgesamt läßt sich so auf relativ einfache und kostengünstige Weise eine faserverstärkte Verbundkeramik herstellen, die deutlich verbesserte Eigenschaften gegenüber herkömmlichen Verbundkeramiken aufweist und insbesondere auch zum Einsatz als Bremskörper bzw. Bremsscheibe bei Hochleistungsbremssystemen für Serien-Kraftfahrzeuge oder Schienenfahrzeuge geeignet ist.

Es versteht sich, daß der Begriff Siliziumschmelze nicht nur reine Siliziumschmelzen umfaßt, sondern auch technische Siliziumschmelzen, die die üblichen Verunreinigungen enthalten oder ggf. Zusätze von Legierungselementen enthalten.

Zur Faserverstärkung werden hierbei bevorzugt C-Fasern oder ggf. auch SiC-Fasern verwendet, obwohl auch die Verwendung von anderen hochwarmfesten Fasern auf der Basis von Si/C/B/N, die zum Teil gerade entwickelt werden, grundsätzlich möglich ist und je nach den Eigenschaften der verwendeten Fasern ggf. sogar zu weiteren Vorteilen führt. Auch sind für besonders preiswerte Produkte Aluminiumoxidfasern denkbar.

In bevorzugter Weiterbildung der Erfindung werden die Faserstoffbündel durch Bündeln von Einzelfilamenten unter Zusatz von Schlichte hergestellt.

Die Bündelung mittels Schlichte geschieht in der Regel beim Hersteller der Faserstoffbündel unmittelbar nach der Erzeugung der Einzelfilamente durch Spinndüsen. Anschließend werden die Faserstoffbündel meist sogleich auf die gewünschte Länge abgetrennt ("gechoppt").

In weiter bevorzugter Ausgestaltung der Erfindung werden die Faserstoffbündel nach dem Imprägnieren und Verfestigen des Bindemittels zusätzlich mit einer zur Pyrolyse geeigneten Silizierungsschutzschicht konditioniert.

Durch diese zusätzliche Beschichtung der Faserstoffbündel mit einer zur Pyrolyse geeigneten Schutzschicht wird eine vorteilhafte zusätzliche Umhüllung der Faserstoffbündel an ihrer äußeren Begrenzung erreicht, wodurch einerseits die Gefahr einer mechanischen Beschädigung der Faserstoffbündel während des Misch- und Preßprozesses zur Herstellung des Grünlings verringert wird und andererseits ein weitgehender Erhalt der Einzelfilamente auch im fertigen Endprodukt gewährleistet wird, wobei der chemische Angriff der flüssigen Siliziumschmelze, der bei Verwendung von C-Fasern zur Reaktion zu SiC führt, durch die bei der Pyrolyse gebildete Schutzschicht aus Kohlenstoff oder ggf. Keramik weitgehend aufgefangen wird, so daß allenfalls wenige Einzelfilamente in den Randbereichen der Faserstoffbündel noch mit Silizium zur Bildung von Siliziumcarbid reagieren.

In weiter bevorzugter Ausgestaltung der Erfindung werden die Faserstoffbündel mit einem kohlenstoffreichen Polymerwerkstoff konditioniert, der bei der Pyrolyse festen Kohlenstoff bildet, vorzugsweise mit einem Harz oder Harzgemisch aus der Gruppe der Phenolharze imprägniert. Hierdurch wird eine hochwirksame Silizierungsschutzschicht erzeugt.

Gemäß einer weiteren Ausführung der Erfindung erfolgt die Imprägnierung mit einem verdünnten oder gelösten Bindemittel, vorzugsweise in einer Misch- oder Rühreinrichtung, derart, daß nach einer Verdunstung oder Trocknung Faserstoffstäbchen gebildet werden, die nicht miteinander verklumpen, wobei jedoch der Faserverbund der einzelnen Faserstoffbündel erhalten bleibt.

Diese Maßnahme hat den Vorteil, daß die Faserstoffbündel auf einfache Weise zu Faserstoffstäbchen verarbeitet werden können, die nicht miteinander verklumpen, so daß eine Schüttfähigkeit erhalten bleibt, die für den späteren Mischprozeß von Vorteil und erheblicher technischer Bedeutung ist.

In weiter vorteilhafter Ausführung der Erfindung wird zur Imprägnierung ein beim Pyrolisieren festen Kohlenstoff bildendes Material, vorzugsweise Pech oder ein Thermoplast verwendet.

Insbesondere bei Kombination dieser Imprägnierung mit einer anschließenden Kontitionierung mit einem Harz oder dergleichen ergibt sich eine weiter verbesserte Schadenstoleranz der Verbundkeramik. Grundsätzlich ist jedoch auch zunächst die Imprägnierung etwa mit einem Harz und anschließende Konditionierung mit einem Pech möglich.

Gemäß einer weiteren Ausführung der Erfindung wird als Silizierungsschutzschicht ein beim Pyrolisieren Siliziumcarbid bildendes Material, vorzugsweise aus der Gruppe der silizium-organischen Polymere, insbesondere Polycarbosilan verwendet.

Auch auf diese Weise läßt sich ein wirksamer Schutz der Faserstoffbündel gegen den Angriff der Siliziumschmelze während der Infiltration erreichen, da bereits bei der Pyrolyse gebildetes SiC eine weitere Reaktion der Fasern mit Silizium behindert.

Gemäß einer weiteren Alternative der Erfindung wird als Silizierungsschutzschicht ein beim Pyrolisieren keramisierendes Material auf der Basis Si-B-C-N, vorzugsweise aus der Gruppe der Silizium-Bor-organischen Polymere, insbesondere Polyborosilazane verwendet, wodurch sich gleichfalls ein verbesserter Schutz gegen den chemischen Angriff der Siliziumschmelze erreichen läßt.

In zusätzlicher Weiterbildung der Erfindung werden Faserbündel verwendet, die aus 1 000 bis 14 000 Einzelfasern mit mittleren turchmessern von etwa 5 bis 10 *µ*m bestehen und eine Länge von etwa 1 bis 30 mm, vorzugsweise von etwa 3 bis 16 mm aufweisen.

Auf diese Weise können kommerziell erhältliche Rovings (z.B. sogenannte 12K-Verbunde) verwendet werden, was eine kostengünstige Herstellung erleichtert.

In vorteilhafter Ausgestaltung der Erfindung werden etwa 20 bis 50 Vol.-%, vorzugsweise etwa 30 bis 40 vol.-% Faserstoffbündel zur Herstellung der Mischung verwendet.

Es hat sich gezeigt, daß mit einem derartigen Volumenverhältnis eine weitgehende Optimierung der mechanischen und thermischen Eigenschaften erreicht werden kann.

In weiter vorteilhafter Ausgestaltung der Erfindung werden der Mischung zur Herstellung des Grünlings kohlenstoffhaltige Füllmittel, vorzugsweise Ruß oder Graphit zugesetzt.

Durch derartige Füllmittel wird der Zusammenhalt bei der Herstellung bzw. anschließenden Pyrolyse des Grünlings unterstützt, die Pyrolyse beschleunigt und Bauteilvolumenveränderungen beim Pyrolisieren herabgesetzt.

In weiter vorteilhafter Ausgestaltung der Erfindung werden der Mischung zur Herstellung des Grünlings oder den zum Imprägnieren oder Konditionieren der Faserstoffbündel verwendeten Materialien Füllmittel in Form von Silizium, von Carbiden, Nitriden oder Boriden von Refraktär-Metallen, vorzugsweise Siliziumcarbid, Titancarbid oder Titanborid in Pulverform zugemischt.

Durch den Zusatz von derartigen harten Füllstoffen wird die Verschleißfestigkeit der Verbundkeramik verbessert.

Die Mischung der Einzelkomponenten wird in einem Kneter oder Mischer unter Zugabe von thermisch aushärtbaren Bindemitteln aufbereitet, anschließend in einer Form gepreßt und zu einem Grünling ausgehärtet.

Hierbei läßt sich der Grünling vor oder nach der Pyrolyse mechanisch auf eine gewünschte Paßform nacharbeiten, bevor die Infiltrierung mit einer Siliziumschmelze erfolgt.

Auf diese Weise läßt sich der Nachbearbeitungsaufwand deutlich reduzieren, da die Grünlinge eine nur geringe Abrasionsbeständigkeit aufweisen und somit selbst nach der Pyrolyse mit geringem Bearbeitungsaufwand nachgearbeitet werden können.

In weiter vorteilhafter Ausgestaltung der Erfindung wird die Mischung durch Wahl der beteiligten Stoffe und ihre Anteile so eingestellt, daß der bei der Pyrolyse des Grünlings gebildete Formkörper eine Porosität von etwa 20 bis 50 % aufweist.

Da sich die Porosität durch die Wahl der Zuschlagstoffe und deren Menge leicht beeinflussen läßt, läßt sich so ein optimales Volumenverhältnis zwischen dem schmelzinfiltrierten Metall und den übrigen Komponenten des Verbundwerkstoffes, den Faserstoffbündeln, den Füllstoffen und C-Precursoren einstellen, um optimierte mechanische und thermische Eigenschaften zu erreichen.

In weiter bevorzugter Ausgestaltung der Erfindung werden vorzugsweise anstelle der Thermoplasten oder Duromere der Mischung Bindemittel zugesetzt, die eine günstige Pyrolysekinetik besitzen, wie etwa PVA oder Methylcellulose, wodurch eine Kombination von Pyrolyse und Silizierung erleichtert wird.

Durch eine Beschleunigung des Pyrolyseschrittes kann so dieser mit der Schmelzinfiltration kombiniert werden, wodurch die Wirtschaftlichkeit deutlich gesteigert wird.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, wie in den Ansprüchen definiert ist, zu verlassen.

Weitere Merkmale und Vorteile der Erfinung ergeben sich aus der nachfolgenden Beschreibung bevorzugter Ausführungsbeispiele unter Bezugnahme auf die Zeichnung. Es zeigen:
- Fig. 1: eine Fertigungsabfolge (von links nach rechts), eines gepreßten Grünlings als CFK-Körper, sowie einer grünbearbeiteten und endbearbeiteten Bremsscheibe aus C/Si-SiC;
- Fig. 2: ein lichtmikroskopisches Schliffbild der Matrix eines hergestellten Verbundkörpers nach Pyrolyse und Schmelzinfiltration mit flüssigem Silizium in 200-facher Vergrößerung;
- Fig. 3: einen Querschliff durch erhaltene Faserstoffbündel nach der Schmelzinfiltration, wobei zu erkennen ist, daß die Faserstoffbündel durch die Doppelbeschichtung praktisch vollständig erhalten bleiben und
- Fig. 4: eine rasterelektronenmikroskopische Aufnahme einer Faser-Matrix-Grenzfläche, aus der zu ersehen ist, daß der Verbundkörper durch den Faser-Pull-Out-Effekt quasi-duktil eingestellt ist.

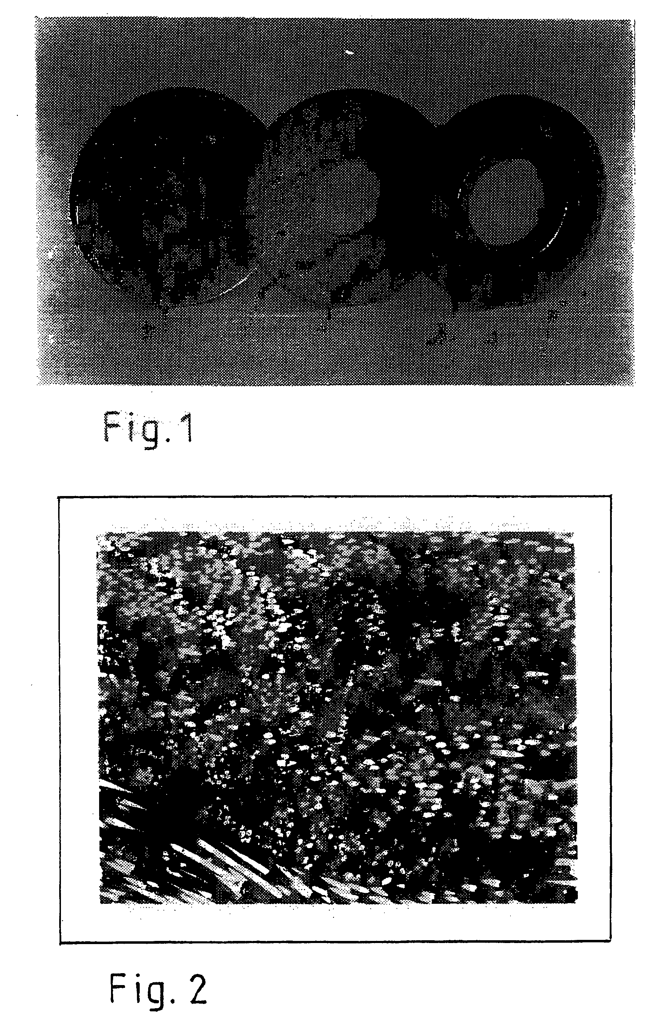

In Fig. 1 ist ein erstes Ausführungsbeispiel zur Herstellung einer Bremsscheibe dargestellt, wobei links ein beim Pressen mit erhöhter Temperatur von etwa 150°C hergestellter formstabiler CFK-Rohling gezeigt ist, der anschließend gebohrt und pyrolisiert wurde (Mitte), nach der Pyrolyse nochmals nachgearbeitet wurde (Bild rechts) und erst danach mit einer technischen Siliziumschmelze infiltriert wurde.

Das nach der Schmelzinfiltration erhaltene Gefüge ist aus Fig. 2 zu ersehen.

### Beispiel 1

Kohlenstoffaserbündel von 3 mm Länge und undefinierter Bündelstärke wurden durch Tränken der Faserstoffbündel mit einer Pechlösung imprägniert und anschließend getrocknet. Danach erfolgte eine Konditionierung durch Tränken in einer Phenolharzlösung und anschließendes Trocknen. Die so beschichteten Fasern bildeten die Grundlage für die Herstellung einer Preßmasse, die unter Zugabe von Kohlenstoffpulver und Phenolharz in einem Mischkneter aufbereitet wurde. Während der Knetung wurde kontinuierlich eine Mischung von TiC und B₄C in Pulverform zugegeben, mit einer mittleren Partikelgröße D₅₀ von 3 µm bzw. D₅₀ von 5,5 µm. Beim Pressen der so aufbereiteten Masse wurde eine endformnahe Preßmatrize verwendet, in der die Masse bei einer Temperatur von mindestens 150°C zu formstabilen CFK-Scheiben ausgehärtet wurden. Darauf erfolgte eine Pyrolyse bei etwa 800°C in einem Pyrolyseofen unter Schutzgas.

Eine eventuell nötige Endformbearbeitung ist in diesem Stadium sehr einfach und kostengünstig mit herkömmlichen Verfahren, wie etwa Drehen, möglich (vgl. Fig. 1).

Nach dieser Nachbearbeitung wurde das Material bei einer Temperatur oberhalb der Si-Schmelztemperatur, bei etwa 1 600°C, unter Vakuum mit einer flüssigen Siliziumschmelze infiltriert.

Anschließend erfolgte eine Abkühlung auf Raumtemperatur.

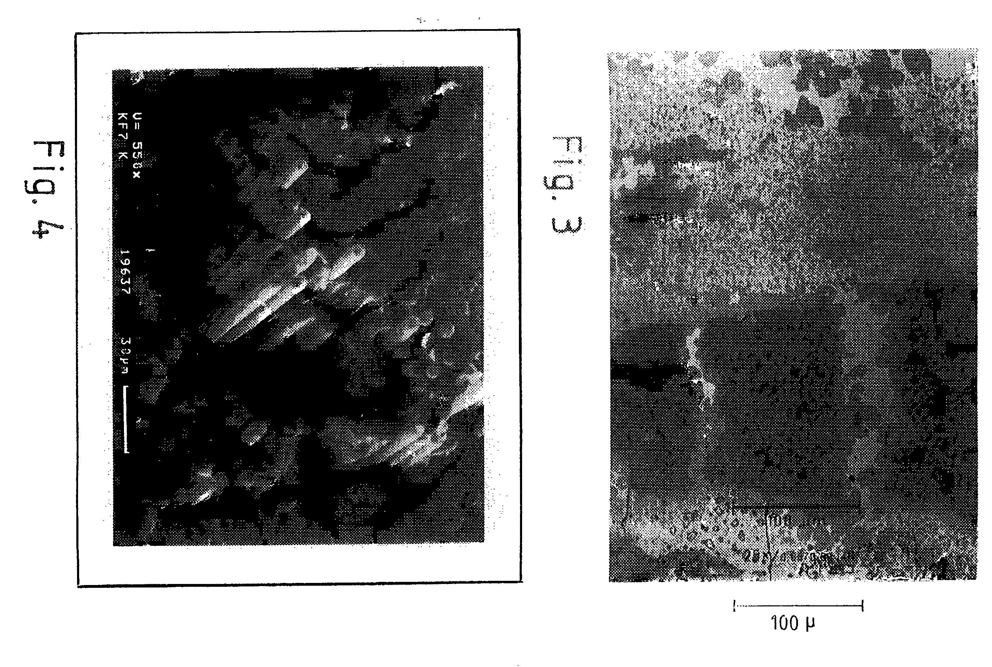

Wie sich aus dem Schliffbild durch einzelne Kohlenstoffaserbündel gemäß Fig. 3 ergibt, werden die Kohlenstoffaserbündel während des gesamten Herstellungsprozesses praktisch vollständig erhalten und an ihrem Rand durch die zweifach aufgebrachte Beschichtung mit dem Phenolharz und dem Pech ausreichend gegen einen reaktiven Angriff durch die Siliziumschmelze geschützt.

Aus der REM-Aufnahme gemäß Fig, 4 einer Faser-Matrix-Grenzfläche ist zu ersehen, daß der hergestellte Verbundkörper durch den Faser-Pull-Out-Effekt quasi-duktil eingestellt wird.

## Patentansprüche

1. Verfahren zur Herstellung einer faserverstärkten Verbundkeramik mit hochwarmfesten Fasern, insbesondere auf der Basis von Si/C/B/N, die mit einer Matrix auf Si-Basis reaktionsgebunden sind, gekennzeichnet durch folgende Schritte:
- Imprägnieren von Faserstoffbündeln, insbesondere aus Si/C/B/N-Fasern mit einem zur Pyrolyse geeigneten Bindemittel und Verfestigen des Bindemittels;
- Herstellen einer Mischung aus Faserstoffbündeln, Füllmitteln und pyrolysierbaren Bindemitteln;
- Pressen der Mischung zur Herstellung eines Grünlings;
- Pyrolyse des Grünlings unter Vakuum oder Schutzgas zur Herstellung eines porösen faserverstärkten Kohlenstoff-Formkörpers;
- Infiltrieren des Formkörpers mit einer Siliziumschmelze.

2. Verfahren nach Anspruch 1, bei dem als Fasern C-Fasern oder SiC-Fasern verwendet werden.

3. Verfahren nach Anspruch 1 oder 2, bei die Faserstoffbündel durch Bündeln von Einzelfilamenten unter Zusatz von Schlichte hergestellt werden.

4. Verfahren nach Anspruch 1, 2 oder 3, bei dem die Faserstoffbündel nach der Imgrägnierung zusätzlich durch Beschichten mit einer zur Pyrolyse geeigneten Silizierungsschutzschicht konditioniert werden.

5. Verfahren nach einem der vorhergehenden Ansprüche, bei dem zur Imprägnierung ein beim Pyrolisieren festen Kohlenstoff bildendes Material, vorzugsweise ein Pech verwendet wird.

6. Verfahren nach einem der vorhergehenden Ansprüche, bei dem die Faserstoffbündel mit einem kohlenstoffreichen Polymerwerkstoff als Silizierungsschutzschicht konditioniert werden, der bei der Pyrolyse Kohlenstoff bildet, vorzugsweise mit einem Harz oder Harzgemisch aus der Gruppe der Phenolharze konditioniert werden.

7. Verfahren nach einem der vorhergehenden Ansprüche, bei dem als Silizierungsschutzschicht ein beim Pyrolisieren Siliziumkarbid bildendes Material, vorzugsweise aus der Gruppe der Silizium-organischen Polymere, insbesondere Polycarbosilan verwendet wird.

8. Verfahren nach einem der Ansprüche 1 bis 6, bei dem als Silizierungsschutzschicht ein beim Pyrolisieren keramisierendes Material auf der Basis von Si-B-C-N, vorzugsweise aus der Gruppe der Silizium-Bor-organischen Polymere, insbesondere Polyborosilazane verwendet wird.

9. Verfahren nach einem der vorhergehenden Ansprüche, bei dem die Imprägnierung mit einem verdünnten oder gelösten Bindemittel, vorzugsweise in einer Misch- oder Rühreinrichtung, derart durchgeführt wird, daß bei einer Verdunstung oder Trocknung Faserstoffstäbchen gebildet werden, die nicht miteinander verklumpen, wobei jedoch der Faserverbund der einzelnen Faserstoffbündel erhalten bleibt.

10. Verfahren nach einem der vorhergehenden Ansprüche, bei dem Faserbündel verwendet werden, die aus etwa 1000 bis 14000 Einzelfasern mit mittleren Durchmessern von etwa 5 bis 10 µm bestehen.

11. Verfahren nach einem der vorhergehenden Ansprüche, bei dem Faserbündel verwendet werden, die eine Länge von etwa 1 bis 30 mm, vorzugsweise von etwa 3 bis 16 mm aufweisen.

12. Verfahren nach einem der vorhergehenden Ansprüche, bei dem etwa 20 bis 50 Vol.-%, vorzugsweise etwa 30 bis 40 Vol.-% Faserstoffbündel zur Herstellung der Mischung verwendet werden.

13. Verfahren nach einem der vorhergehenden Ansprüche, bei dem der Mischung zur Herstellung des Grünlings kohlenstoffhaltige Füllmittel, vorzugsweise Ruß oder Graphit zugesetzt werden.

14. Verfahren nach einem der vorhergehenden Ansprüche, bei dem der Mischung zur Herstellung des Grünlings oder den zum Imprägnieren oder Kondftionieren der Faserstoffbündel verwendeten Materialien Füllmittel in Form von Silizium, von Karbiden, Nitriden oder Boriden von Refraktär-Metallen, vorzugsweise Siliziumkarbid, Titankarbid oder Titanborid in Pulverform zugemischt werden.

15. Verfahren nach einem der vorhergehenden Ansprüche, bei dem die Mischung in einem Kneter oder Mischer unter Zugabe von thermisch aushärtbaren Bindemitteln aufbereitet und anschließend in einer Form gepreßt und zu einem Grünling ausgehärtet wird.

16. Verfahren nach einem der vorhergehenden Ansprüche, bei dem der Grünling vor oder nach der Pyrolyse mechanisch auf eine gewünschte Paßform nachgearbeitet wird, bevor die Infiltrierung mit einer Siziliumschmelze erfolgt.

17. Verfahren nach einem der vorhergehenden Ansprüche, bei dem die Mischung durch Wahl der beteiligten Stoffe und ihrer Anteile so eingestellt wird, daß der bei der Pyrolyse des Grünlings gebildete Formkörper eine Porosität von etwa 20 bis 50 % aufweist.

18. Verfahren nach einem der vorhergehenden Ansprüche, bei dem der Mischung Bindemittel, vorzugsweise PVA oder Methylcellulose, zugesetzt werden, die eine günstige Pyrolysekinetik besitzen, um somit eine kombinierte Pyrolyse und Silizierung zu fördern.

19. Faserverstärkte Verbundkeramik mit hochwarmfesten Fasern, insbesondere auf der Basis von Si/C/B/N, die mit einer Matrix auf Si-Basis reaktionsgebunden sind, wobei in der Matrix Kurzfaserbündel statistisch verteilt eingebettet sind, die aus gebündelten Einzelfaserfilamenten unter weitgehendem Erhalt der einzelnen Filamente bestehen, wobei die Kurzfaserbündel zumindest in ihrem Randbereich von einer Beschichtung aus Kohlenstoff umgeben sind, der ganz oder teilweise mit dem Matrixwerkstoff reagiert hat.

## Claims

1. Method for the production of a fibre-reinforced composite ceramic material with high temperature resistant fibres, in particular based on Si/C/B/N, reaction-bonded to a matrix based on Si, characterised by the following steps:
- Impregnation of fibre bundles, in partcular consisting of Si/C/B/N fibres, with a bonding agent suitable for pyrolysis and consolidation of the bonding agent;
- Production of a mixture of fibre bundles, fillers and bonding agents suitable for pyrolysis;
- Pressing the mixture to produce a green compact;
- Pyrolysis of the green compact in the presence of vacuum or inert gas to produce a porous, fibre-reinforced carbon body;
- Infiltration of the body with a silicon melt.

2. Method according to claim 1, wherein C or SiC fibres are used as fibres.

3. Method according to claim 1 or 2, wherein the fibre bundles are produced by bunching individual filaments with the addition of size.

4. Method according to claim 1, 2 or 3, wherein the fibre bundles are additionally conditioned by coating with a protective siliconising layer suitable for pyrolysis following their impregnation.

5. Method according to any of the preceding claims, wherein a material forming solid carbon during pyrolysis, preferably a pitch, is used for impregnation.

6. Method according to any of the preceding claims, wherein the fibre bundles are conditioned with a protective siliconising layer represented by a high-carbon polymer material producing carbon during pyrolysis, preferably by a resin or resin mixture from the phenolic resin group.

7. Method according to any of the preceding claims, wherein a material producing silicon carbide, preferably from the organosilicon polymer group, in particular polycarbosilane, is used as a protective siliconising layer.

8. Method according to any of claims 1 to 6, wherein a material ceramising during pyrolysis and based on Si-B-C-N, preferably from the of ganic silicon-boron polymer group, in particular polyborosilazane, is used as a protective siliconising layer.

9. Method according to any of the pieceding claims, wherein the impregnation with a diluted or dissolved bonding agent is, preferably in a mixing or agitating unit carried out in such a way that little fibre rods which do not agglomerate are formed during evaporation or drying while retaining the fibre bond of individual fibre bundles.

10. Method according to any of the preceding claims, wherein fibre bundles consisting of 1000 to 14000 individual fibres approximately with a mean diameter of 5 to 10 µm approximately are used.

11. Method according to any of the preceding claims, wherein fibre bundles with a length of 1 to 30 mm approximately, preferably 3 to 16 mm, are used.

12. Method according to any of the preceding claims, wherein 20 to 50 percent by volume approximately, preferably 30 to 40 percent by volume approximately, of fibre bundles are used to produce the mixture.

13. Method according to any of the preceding claims, wherein carbonaceous fillers, preferably carbon black or graphite, are added to the mixture to produce the green compact.

14. Method according to any of the preceding claims, wherein fillers in the form of silicon, or of carbides, nitrides or borides of refractory metals, preferably silicon carbide, titanium carbide or titanium boride, in powder form are added to the mixture to produce the green compact or to the materials used for impregnating or conditioning the fibre bundles.

15. Method according to any of the preceding claims, wherein the mixture is processed in a masticator or mixer with the addition of thermally curable bonding agents and subsequently pressed in a mould and cured to produce a green compact.

16. Method according to any of the preceding claims, wherein the green compact is mechanically finished to produce a desired shape before or after pyrolysis, prior to infiltration with a silicon melt.

17. Method according to any of the preceding claims, wherein the mixture is so adjusted by appropriate selection of its ingredients and their proportions that the body produced by the pyrolysis of the green compact has a porosity of 20% to 50% approximately.

18. Method according to any of the preceding claims, wherein bonding agents, preferably PVA or methyl cellulose, with good pyrolysis kinetics are added to the mixture to promote combined pyrolysis and siliconisation.

19. Fibre-reinforced composite ceramic material with high temperature resistant fibres, in particular based on Si/C/B/N, reaction-bonded to a matrix based on Si, wherein statistically distributed short fibre bundles consisting of bunched individual fibre filaments which are largely retained are embedded in the matrix, at least the edge area of the short fibre bundles being surrounded by a coating of carbon which has wholly or partially reacted with the matrix material.

## Revendications

1. Procédé de fabrication d'une céramique composite renforcée par des fibres, comportant des fibres résistant aux hautes températures, à base de Si/C/B/N, liées, par une réaction, à une matrice à base de Si, caractérisé par les étapes suivantes :
- imprégnation de faisceaux de matériau à fibres, en particulier constituées de fibres en Si/C/B/N, avec un liant approprié pour la pyrolyse et solidification du liant;
- fabrication d'un mélange de faisceaux de matériau à fibres, de charges de remplissage et de liants pyrolysables;
- pressage du mélange pour fabriquer un produit vert;
- pyrolyse du produit vert, sous vide ou sous gaz protecteur, pour fabriquer un corps de forme à base de carbone, poreux, renforcé par des fibres;
- infiltration du corps de forme avec une masse de silicium fondue.

2. Procédé selon la revendication 1, dans lequel on utilise comme fibres des fibres de C ou des fibres de Sic.

3. Procédé selon la revendication 1 ou 2, dans lequel les fibres de matière à fibres sont fabriquées par formation, en faisceaux ou bottes, de filaments individuels avec addition d'un produit d'encollage.

4. Procédé selon la revendication 1, 2 ou 3, dans lequel les faisceaux de matériau à fibres sont conditionnés après imprégnation, en plus par enduction par une couche protectrice de silicification appropriée pour la pyrolyse.

5. Procédé selon l'une des revendications précédentes, dans lequel pour l'imprégnation un matériau formant du carbone solide lors de la pyrolisation, de préférence un brai.

6. Procédé selon l'une des revendications précédentes, dans lequel les faisceaux de carbone sont conditionnés avec un matériau polymère riche en carbone, à titre de couche protectrice de silicification, matériau formant du carbone lors de la pyrolyse, de préférence conditionné avec une résine ou un mélange de résine issu du groupe des résines phénoliques.

7. Procédé selon l'une des revendications précédentes, dans lequel on utilise, comme matériau protecteur de silicification, un matériau formant du carbone de silicium lors de la pyrolyse, de préférence issu du groupe des polymères organo-silicium, en particulier du polycarbosilane.

8. Procédé selon l'une des revendications 1 à 6, dans lequel on utilise comme couche protectrice de silicification un matériau formant de la céramique lors de la pyrolyse, à base de Si-B-C-N, de préférence issu du groupe des polymères organiques silicium-bore, en particulier du polyborosilazane.

9. Procédé selon l'une des revendications précédentes, dans lequel l'imprégnation est effectuée avec un liant dilué ou dissous, de préférence dans un mélangeur ou un agitateur, de manière que, lors d'une évaporation ou d'un séchage, soient formées des petites barres de matériau à fibres, qui ne s'agglomèrent pas les unes les autres en grumeaux, cependant le composite de fibres des différents faisceaux de matériau à fibres étant encore obtenu.

10. Procédé selon l'une des revendications précédentes, dans lequel sont utilisés des faisceaux de fibre constitués d'environ 1000 à 14000 fibres individuelles, de diamètre moyen d'environ 5 à 10 mm.

11. Procédé selon l'une des revendications précédentes, dans lequel on utilise des faisceaux de fibres d'une longueur d'environ 10 à 30 mm, de préférence d'environ 3 à 7 mm.

12. Procédé selon l'une des revendications précédentes, dans lequel environ 20 à 50 % en volume, de préférence environ 30 à 40 % de faisceaux de matériau à fibres sont utilisés pour fabriquer le mélange.

13. Procédé selon l'une des revendications précédentes, dans lequel on ajoute au mélange, pour la fabrication du produit vert, un produit de remplissage ou charge contenant du carbone, de préférence de la suie ou du graphite.

14. Procédé selon l'une des revendications précédentes, dans lequel on ajoute au mélange, pour la fabrication du produit vert, ou on ajoute au matériau utilisé pour l'imprégnation, le conditionnement des faisceaux de matériau à fibres, des produits de remplissage ou charges, se présentant sous la forme de silicium, de carbures, de nitrures ou de borures, de métaux réfractaires, de préférence du carbone de silicium, du carbure de titane ou du borure de titane, sous forme de poudre.

15. Procédé selon l'une des revendications précédentes, dans lequel le mélange est préparé dans un pétrisseur ou un mélangeur, avec addition de liants durcissables thermiquement, et on presse ensuite dans un moule et on durcit pour obtenir un produit vert.

16. Procédé selon l'une des revendications précédentes, dans lequel le produit vert est retraité avant ou après la pyrolyse, mécaniquement, sur un moule ajusté souhaité, avant d'effectuer l'infiltration par une masse de silicium fondu.

17. Procédé selon l'une des revendications précédentes, dans lequel le mélange est réglé par le biais du choix des matériaux concernés et de leurs proportions, de manière que le corps de forme, produit lors de la pyrolyse du produit vert, ait une porosité d'environ 20 à 50 %.

18. Procédé selon l'une des revendications précédentes, dans lequel on ajoute au mélange des liants; de préférence du PVA ou de la méthylcellulose, liants ayant une cinétique de pyrolyse avantageuse, afin de favoriser ainsi une pyrolyse et une silicification combinées.

19. Céramique composite renforcée par des fibres, comportant des fibres résistant aux hautes températures, en particulier à base de Si/C/B/N, liées par réaction à une matrice à base de Si, dans la matrice étant intégrée, selon une répartition statistique, des faisceaux de fibres courtes qui sont constituées de filaments de fibres individuelles formées en faisceaux, avec conservation poussée des différents filaments, les faisceaux de fibres courtes étant entourés, au moins dans leur zone de bordure, par un revêtement en carbone qui a réagi en totalité ou en partie avec le matériau en matrice
